# EUROPÄISCHE PATENTSCHRIFT

(11) **EP 0 903 651 B1**
(45) Veröffentlichungstag und Bekanntmachung des Hinweises auf die Patenterteilung: **23.04.2003**
(21) Anmeldenummer: 97116243.3
(22) Anmeldetag: 18.09.1997
(51) Int. Cl.: G05B 19/042

(54) **Messgerät-Bussystem-Anordnung und Adapter dafür**
Measuring device / bus system interface and adapter therefor
Agencement d'appareils de mesure, du système bus et de leurs adaptateurs

(43) Veröffentlichungstag der Anmeldung: 24.03.1999
(73) Patentinhaber: Endress + Hauser GmbH + Co.KG., 79689 Maulburg (DE)
(72) Erfinder: Schimanski, Andreas, 68510 Routzwiller (FR); Frikkee, Arian, 32760 Detmold (DE); Leitner, Josef, 58515 Lüdenscheid (DE)
(74) Vertreter: Andres, Angelika

(56) Entgegenhaltungen:
- EP-B- 0 452 658
- EP-B- 0 695 468
- EP-B- 0 695 475
- WO-A-96/11441
- DE-A- 4 444 024

## Beschreibung

Die Erfindung betrifft eine Meßgerät-Bussystem-Anordnung und einen dafür geeigneten Adapter.

Mit industriellen Meßgeräten werden die unterschiedlichsten physikalischen Größen gemessen, wie z.B. der Volumen- oder der Massedurchfluß, die Strömungsgeschwindigkeit, die Dichte, die Viskosität, der Druck, die Temperatur, die elektrische Leitfähigkeit und/oder der pH-Wert von Fluiden oder der Füllstand eines Materials in einem Behälter.

Ganz allgemein betrachtet, umfassen derartige Meßgeräte mindestens einen physikalisch-elektrischen Wandler als Sensorelement für mindestens eine zu messende physikalische Größe und eine Auswerte-Elektronik, die ein der bzw. den physikalischen Größe bzw. Größen proportionales Signal bzw. proportionale Signale, z.B. in Form von Strömen, Spannungen oder Frequenzen von Wechselsignalen, erzeugt. Die Auswerte-Elektronik kann entweder in einem von übrigen Teilen des Meßgeräts räumlich getrennten Elektronik-Gehäuse oder wie im Fall eines Kompakt-Meßgeräts in einem Teil des Meßgerät-Gehäuses selbst untergebracht sein.

Zur Verbindung mehrerer Meßgeräte untereinander und/oder mit einer Zentraleinheit, die sich z.B. in einer Steuerzentrale befindet, dienen schon lange, insb. digitale, Bussysteme, wie z.B. die unter den Namen Fieldbus, E+H-Bus, Modbus oder Profibus mit seinen Varianten PA (vorwiegend für die Prozeß-Automatisierung), DP (vorwiegend für die Fertigungs-Automatisierung) und FMS (vorwiegend für allgemeine Automatisierung) bekannt gewordenen Bussysteme.

Eine Aufgabe der Erfindung besteht darin, eine Meßgerät-Bussystem-Anordnung und einen dafür geeigneten Adapter anzugeben, mit der bzw. mit dem verschiedenartigste Meßgeräte an ein gegebenes Bussystem angeschlossen werden können.

Zur Lösung dieser Aufgabe besteht eine erste Variante der Erfindung in einer Meßgerät-Bussystem-Anordnung
- mit einem ersten, einem zweiten und einem m-ten Meßgerät, das
   -- ein Elektronik-Gehäuse mit einer Gewinde-Bohrung für eine an sich einzuschraubende Kabeldurchführung sowie
   -- eine erste, eine zweite und eine n-te im Elektronik-Gehäuse angeordnete Klemme aufweist,
      --- wobei m und n ganzzahlig und gleich oder größer als zwei sind sowie m gleich oder ungleich n ist,
- mit einem eine erste, eine zweite und eine n-te Leitung aufweisenden Bussystem,
   -- das die n Leitungen zusammenfassende Kabelabschnitte umfaßt,
- mit einem ersten, einem zweiten und einem m-ten Busverteiler aus Metall, der
   -- eine zuführende Kabeldurchführung für einen zuführenden Kabelabschnitt,
   -- eine abführende Kabeldurchführung für einen abführenden Kabelabschnitt,
   -- eine Leiterplatte mit einer ersten, einer zweiten und einer n-ten Leitbahn, von denen
      --- die erste mit der ersten Leitung des zuführenden Kabelabschnitts und mit der ersten Leitung des abführenden Kabelabschnitts,
      --- die zweite mit der zweiten Leitung des zuführenden Kabelabschnitts und mit der zweiten Leitung des abführenden Kabelabschnitts sowie
      --- die n-te mit der n-ten Leitung des zuführenden Kabelabschnitts und mit der n-ten Leitung des abführenden Kabelabschnitts verbunden ist, und
   -- eine positionier- und danach verriegelbare Buchsenanordnung mit einer ersten, einer zweiten und einer n-ten Buchse aufweist,
      --- von denen die erste mit der ersten Leitbahn, die zweite mit der zweiten Leitbahn und die n-te mit der n-ten Leitbahn kontaktiert ist, und
- mit einem ersten, einem zweiten und einem m-ten Adapter,
   -- der als Metallrohr mit einem ersten und einem zweiten Ende ausgebildet ist,
      --- welches erste Ende ein in die Gewinde-Bohrung des Meßgeräts eingeschraubtes und mittels einer angeformten Mutter gegen Verdrehen gesichertes Außengewinde aufweist und
      --- welches zweite Ende mit einem in die Buchsenanordnung passenden, damit verriegelten und einen ersten, einen zweiten und einen n-ten Steckerstift aufweisenden Stecker versehen ist,
         ---- von welchen Steckerstiften der erste mittels einer ersten Zwischenverbindungsleitung an der ersten Klemme, der zweite mittels einer zweiten Zwischenverbindungsleitung an der zweiten Klemme und der n-te mittels einer n-ten Zwischenverbindungsleitung an der n-ten Klemme angeschlossen ist.

Zur Lösung der oben genannten Aufgabe besteht eine zweite Variante der Erfindung in einem Adapter zum elektrischen Verbinden von innerhalb eines Elektronik-Gehäuses eines Meßgeräts angeordneten Klemmen mit einem einzelne Leitungen aufweisenden Bussystem über einen Busverteiler aus Metall und zum freitragenden mechanischen Fixieren des Busverteilers am Meßgerät,
- dessen Elektronik-Gehäuse mindestens eine Gewinde-Bohrung für eine an sich einzuschraubende Kabeldurchführung aufweist,
- welcher Busverteiler mit einer an die Leitungen des Bussystems angeschlossenen, positionier- und danach verriegelbaren Buchsenanordnung versehen ist,
- welcher Adapter als Metallrohr mit einem ersten und einem zweiten Ende ausgebildet ist,
   -- welches erste Ende ein in die Gewinde-Bohrung des Meßgeräts passendes erstes Außengewinde mit einer zugehörigen ersten Kontermutter aufweist und
   -- welches zweite Ende mit einem in die Buchsenanordnung passenden, entsprechende Steckerstifte aufweisenden und mit der Buchsenanordnung verriegelbaren Stecker versehen ist,
      --- von denen jeder Steckerstift an einer zum Anschluß an die entsprechende Klemme ausreichend langen Zwischenverbindungsleitung angeschlossen ist.

Nach einer ersten vorteilhaften Ausgestaltung der ersten bzw. der zweiten Variante der Erfindung umfaßt der Adapter
- ein busverteiler-seitiges Teil,
   -- das an seinem stecker-abgewandten Ende ein Sack-Innengewinde und
   -- einen in einer zugeordneten Nut angeordneten O-Ring am inneren Ende des Sack-Innengewindes aufweist, und
- ein meßgerät-seitiges Teil,
   -- das am vom zweiten Ende abgewandten Ende ein zum Sack-Innengewinde passendes zweites Außengewinde aufweist,
      --- das bis unter die Mutter reicht und
      --- auf dem eine Kontermutter verdrehbar sitzt.

Nach einer zweiten vorteilhaften Ausgestaltung der ersten bzw. der zweiten Variante der Erfindung trägt das erste Außengewinde des Adapters auf seinem nicht in die Gewinde-Bohrung eingeschraubten Teil einen Dichtring, den die erste Kontermutter übergreift.

Ein Vorteil der Erfindung besteht darin, daß die Busverteiler freitragend an den Meßgeräten mechanisch befestigt werden können, so daß die Busverteiler nicht an oder auf einem Träger, wie z.B. an einer Wand oder auf einem Boden, fixiert zu werden brauchen. Ferner ist die elektrische Verbindung zwischen Meßgerät und Busverteiler wegen der zwischen Adapter und Busverteiler vorgesehenen Steckverbindung kurz, EMV-sicher und fest, jedoch auch jederzeit wieder lösbar.

Die Erfindung und weitere Vorteile werden nun anhand von Ausführungsbeispielen näher erläutert, die in den Figuren der Zeichnung schematisch dargestellt sind; dabei sind Bezugszeichen, die anhand einer bestimmten Figur erläutert wurden, in folgenden Figuren nur noch wenn erforderlich wieder eingetragen.
- Fig. 1: zeigt schematisch den Aufbau einer Meßgerät-Bussystem-Anordnung,
- Fig. 2: zeigt in gegenüber Fig. 1 vergrößertem Maßstab und teilweise aufgeschnitten eine einzelne Meßgerät-Adapter-Busverteiler-Anordnung,
- Fig. 3: zeigt teilweise aufgeschnitten eine erste Ausgestaltung eines Adapters,
- Fig. 4: zeigt teilweise aufgeschnitten einen busverteilerseitigen Teil des Adapters von Fig. 3,
- Fig. 5: zeigt teilweise aufgeschnitten einen meßgerätseitigen Teil des Adapters von Fig. 3, und
- Fig. 6: zeigt teilweise aufgeschnitten eine zweite Ausgestaltung eines Adapters.

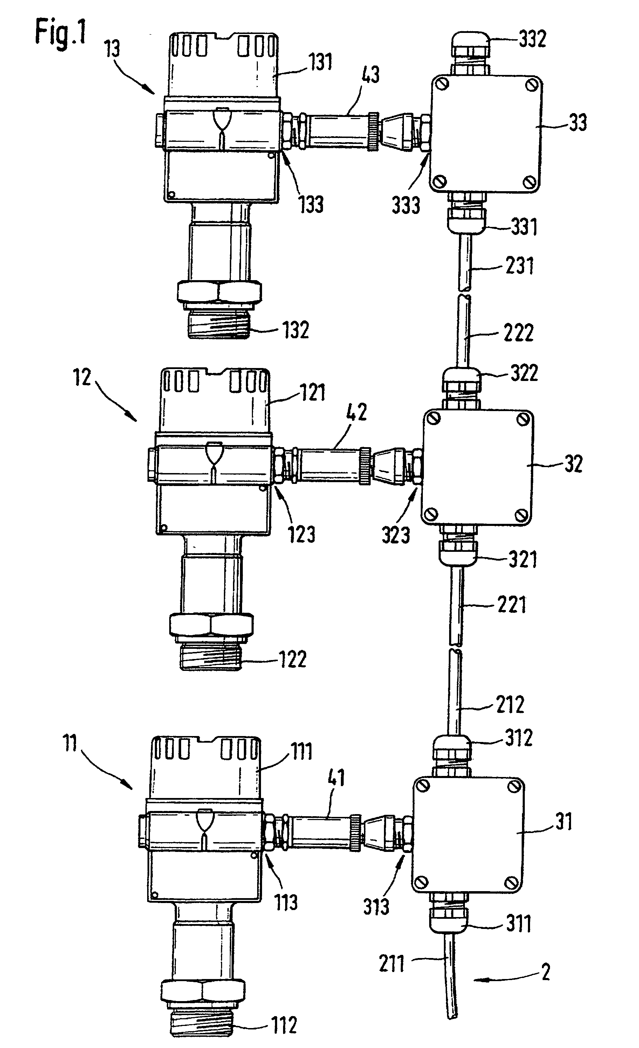

Ein prinzipieller Aufbau einer Meßgerät-Bussystem-Anordnung ist in Fig. 1 schematisch dargestellt. Die Anordnung umfaßt ein erstes Meßgerät 11, ein zweites Meßgerät 12 und ein m-tes Meßgerät 13. Die Laufzahl m ist ganzzahlig und mindestens gleich zwei.

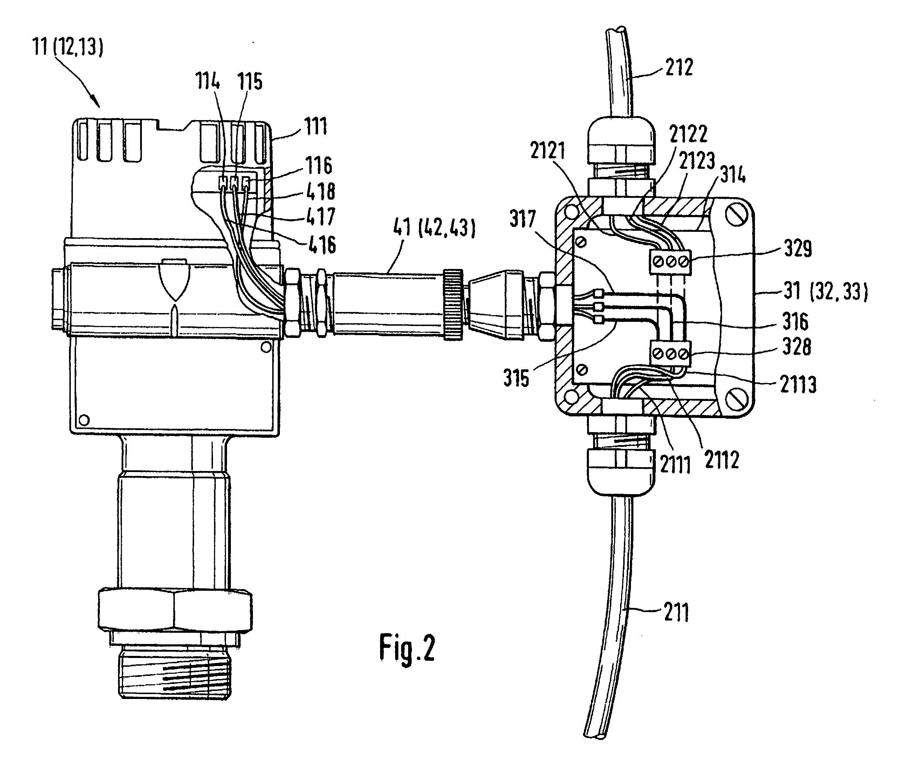

Jedes Meßgerät hat ein eigenes Elektronik-Gehäuse 111 bzw. 121 bzw. 131, mit dem ein Sensorelement 112 bzw. 122 bzw. 132 für eine zu messende physikalische Größe baulich vereinigt ist. Bei den Meßgeräten der Fig. 1 und 2 sind dies Druck-Sensorelemente; die Erfindung ist jedoch nicht auf Druck-Sensorelemente beschränkt, sondern sie ist z.B. auch zusammen mit anderen der oben erwähnten physikalisch-elektrischen Wandler ausführbar.

Jedes Elektronik-Gehäuse 111 bzw. 121 bzw. 131 ist mit einer Gewinde-Bohrung 113 bzw. 123 bzw. 133 für eine darin einzuschraubende Kabeldurchführung versehen. Die Gewinde-Bohrung 113 bzw. 123 bzw. 133 kann z.B. ein in Deutschland so genanntes PG-Gewinde sein.

Üblicherweise führt durch eine solche Kabeldurchführung ein mehradriges Kabel hindurch, über das Speise-Energie und/oder Steuersignale und/oder Meßsignale geführt sind. Meist enthält die Kabeldurchführung auch eine Zugentlastung und/oder einen Knickschutz für das Kabel. Für die Erfindung ist jedoch nur wichtig, daß eine an sich für eine solche Kabeldurchführung vorgesehene Gewinde-Bohrung vorhanden ist, die jedoch bei der Erfindung anders genutzt wird.

Ein Bussystem 2 mit einer ersten, einer zweiten und einer n-ten Leitung enthält die n Leitungen zusammenfassende Kabelabschnitte 211, 212, 221, 222, 331. Die Laufzahl n ist wie die Laufzahl m ganzzahlig und mindestens gleich zwei sowie gleich oder ungleich m.

Es sind erster, ein zweiter und ein m-ter Busverteiler 31, 32, 33 aus Metall vorhanden. Jeder Busverteiler 31 bzw. 32 bzw. 33 hat eine zuführende Kabeldurchführung 311 bzw. 321 bzw. 331 für einen zuführenden Kabelabschnitt 211 bzw. 221 bzw. 231 und eine abführende Kabeldurchführung 312 bzw. 322 bzw. 332 für einen abführenden Kabelabschnitt 212 bzw. 222. Jeder Busverteiler 31 bzw. 32 bzw. 33 hat ferner eine verriegelbare Buchsenanordnung 313 bzw. 323 bzw. 333 mit einer ersten, einer zweiten und einer n-ten Buchse 318, 319, 320.

Zwischen dem ersten Meßgerät 11 und dem ersten Busverteiler 31 ist ein erster Adapter 41, zwischen dem zweiten Meßgerät 12 und dem zweiten Busverteiler 33 ein zweiter Adapter 42 und zwischen dem m-ten Meßgerät 13 und dem m-ten Busverteiler 33 ein m-ter Adapter 43 angeordnet. Jeder Adapter verbindet mechanisch freitragend und fest sowie lösbar das zugehörige Meßgerät mit dem zugeordneten Busverteiler.

In Fig. 2 ist in gegenüber Fig. 1 vergrößertem Maßstab und teilweise aufgeschnitten eine einzelne Meßgerät-Adapter-Busverteiler-Anordnung gezeigt, so daß der für die Erfindung wichtige Aufbau von deren einzelnen Teilen veranschaulicht ist. Im Elektronik-Gehäuse 111 sind eine erste Klemme 114, eine zweite Klemme 115 und eine n-te Klemme 116 angeordnet.

Eine erste Zwischenverbindungsleitung 416 ist in der Klemme 114, eine zweite Zwischenverbindungsleitung 417 in der Klemme 115 und eine n-te Zwischenverbindungsleitung 418 in der Klemme 116 fixiert, z.B. durch Verschrauben festgeklemmt, also auch wieder lösbar.

Im Busverteiler 31 ist eine Leiterplatte 314 mit einer ersten, einer zweiten und einer n-ten Leitbahn 315, 316, 317 befestigt. Diese Leitbahnen sind, wie durch die teilweise gestrichelte Darstellung angedeutet ist, auf beiden Oberflächen der Leiterplatte angeordnet, um Leitungskreuzungen zu umgehen. Zueinander gehörende Leitbahnen sind mittels einer entsprechenden Durchkontaktierung elektrisch miteinander verbunden.

Die Leitbahn 315 ist mit der ersten Leitung 2111 des zuführenden Kabelabschnitts 211 und mit der ersten Leitung 2121 des abführenden Kabelabschnitts 212 verbunden. Die Leitbahn 316 ist mit der zweiten Leitung 2112 des zuführenden Kabelabschnitts 211 und mit der zweiten Leitung 2122 des abführenden Kabelabschnitts 212 verbunden. Die Leitbahn 317 ist mit der n-ten Leitung 2113 des zuführenden Kabelabschnitts 211 und mit der n-ten Leitung 2123 des abführenden Kabelabschnitts 212 verbunden ist.

Die Verbindung der Leitbahn 315 bzw. 316 bzw. 317 mit der Leitung 2111 bzw. 2112 bzw. 2113 des zuführenden Kabelabschnitts 211 erfolgt bevorzugt mittels Klemmen einer ersten Klemmleiste 328. Die Verbindung der Leitbahn 315 bzw. 316 bzw. 317 mit der Leitung 2121 bzw. 2122 bzw. 2123 des abführenden Kabelabschnitts 212 erfolgt bevorzugt mittels Klemmen einer zweiten Klemmleiste 329.

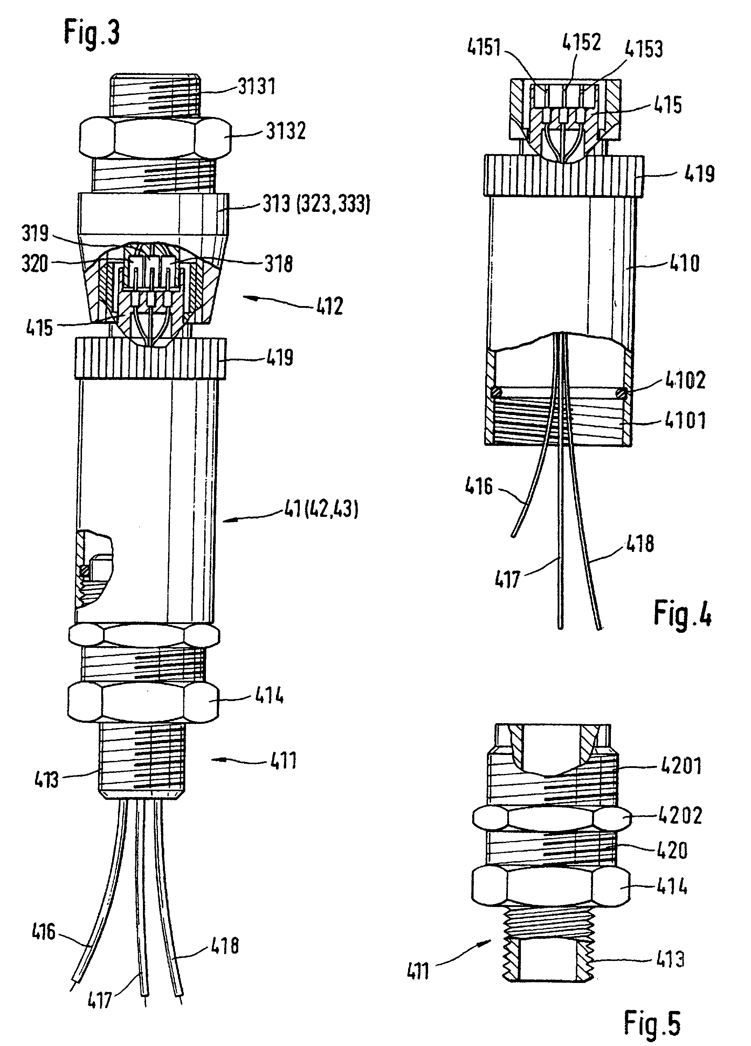

Schließlich weist der Busverteiler 31 bzw. 32 bzw. 33 eine verriegelbare Buchsenanordnung 313 bzw. 323 bzw. 333 mit einer ersten, einer zweiten und einer n-ten Buchse 318, 319, 320 auf, vgl. hierzu die Fig. 3. Die Buchse 318 ist mit der Leitbahn 315, die Buchse 319 mit der Leitbahn 316 und die Buchse 320 mit der Leitbahn 317 kontaktiert, z.B. durch Einlöten entsprechender kurzer Leitungsbrücken.

Die Fig. 3 zeigt teilweise aufgeschnitten einen der Adapter 41 bzw. 42 bzw. 43. Er ist als Metallrohr mit einem ersten Ende 411 und einem zweiten Ende 412 ausgebildet. Das erste Ende 411 hat ein in die Gewinde-Bohrung 113 bzw. 123 bzw. 133 des Meßgeräts 11 bzw. 21 bzw. 31 passendes und in diese einzuschraubendes Außengewinde 413.

Auf dem Außengewinde 413 ist eine zugehörige erste Kontermutter 414 bewegbar, mittels der das Ende 411 gegen Verdrehen oder Lösen gesichert werden kann. Ferner ist es möglich, die räumliche Lage und Orientierung von Adapter 41 bzw. 42. bzw. 43 und Busverteiler 31 bzw. 32 bzw. 33 festzulegen und diese gegenüber dem Meßgerät 11 bzw. 12 bzw. 13 auszurichten und zu positionieren.

Das zweite Ende 412 ist mit einem in die Buchsenanordnung 313 des Busverteilers 31 passenden und mit dieser mittels einer Rändelmutter 419 verriegelbaren Stecker 415 versehen. Anstatt der Rändelmutter 419 kann auch ein BajonettVerschluß o.ä. vorgesehen werden.

In Fig. 3 ist ferner zu sehen, daß die Buchsenanordnung 313 ein Außengewinde 3131 und eine weitere Kontermutter 3132 aufweist, mittels der sie in der Gewinde-Bohrung 113 des Busverteilers 13 gegen Verdrehen oder Lösen gesichert werden kann.

In Fig. 4 ist dargestellt, daß der Stecker 415 einen ersten Steckerstift 4151, einen zweiten Steckerstift 4152 und einen n-ten Steckerstift 4153 aufweist. Der Steckerstift 4151 ist an die Zwischenverbindungsleitung 416, der Steckerstift 4152 an die Zwischenverbindungsleitung 417 und der Steckerstift 4153 an die Zwischenverbindungsleitung 418 angeschlossen.

Somit sind bei der in Fig. 2 dargestellten Anordnung die Klemme 114 mit dem Steckerstift 4151, die Klemme 115 mit dem Steckerstift 4152 und die Klemme 116 mit dem Steckerstift 4153 elektrisch verbunden und dadurch auch mit den entsprechenden Leitungen des Bussytems 2.

Die Fig. 5 zeigt zusammen mit dem unteren Teil von Fig. 4 einen ersten bevorzugten Aufbau des Adapters 41 bzw. 42 bzw. 43, und zwar dessen busverteiler-seitigen Teil 410 in Fig. 4 und dessen meßgerät-seitigen Teil 420 in Fig. 5; der Adapter ist hier also zweiteilig. Das Teil 410 hat an seinem stecker-abgewandten Ende ein Sack-Innengewinde 4101, an dessen innerem Ende ein O-Ring 4102 in einer zugeordneten Nut angeordnet ist.

Das Teil 420 entsprechend Fig. 5 hat am vom Ende 411 abgewandten Ende ein zum Sack-Innengewinde 4101 passendes Außengewinde 4201, das bis zur Kontermutter 414 reicht und auf dem eine zweite Kontermutter 4202 verdrehbar sitzt. Mit dieser wird das Teil 420 im Teil 410 verdrehsicher fixiert, wenn es bis zum O-Ring 4102 eingeschraubt worden ist. Am Ende 411 ist das bereits erwähnte, in die Gewinde-Bohrung 113 bzw. 123 bzw. 133 des Meßgeräts 11 bzw. 12 bzw. 13 einzuschraubende und mittels der Kontermutter 414 gegen Verdrehen sicherbare Außengewinde 413 vorgesehen.

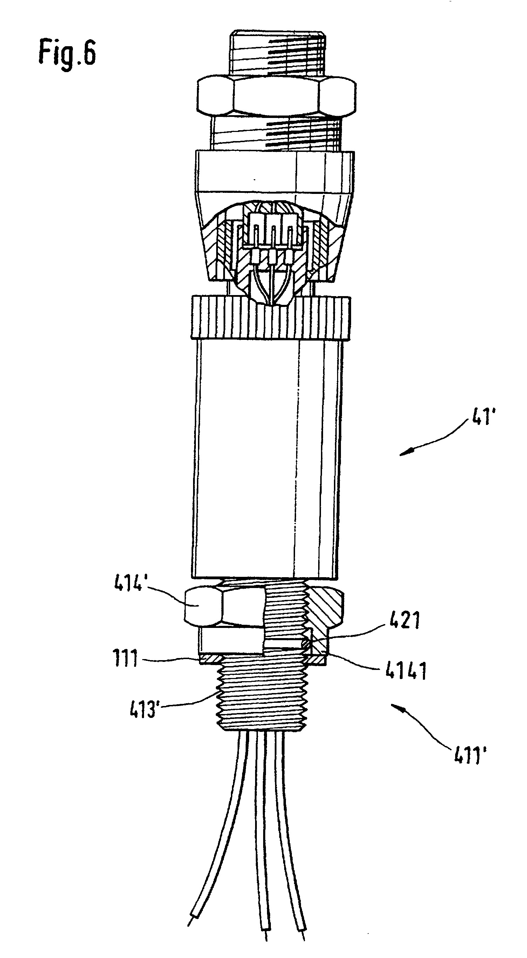

Die Fig. 6 zeigt einen zweiten bevorzugten Aufbau eines Adapters 41', der hier einteilig ist. Ein mit dem Ende 411 des ersten bevorzugten Aufbaus entsprechend den Fig. 4 und 5 vergleichbares Ende 411' ist wie folgt modifiziert.

Ein dem Außengewinde 413 entsprechendes Außengewinde 413' trägt auf seinem nicht in die Gewinde-Bohrung 113 eingeschraubten Teil einen Dichtring 421. Auf dem Außengewinde 413' ist eine der Kontermutter 414 entsprechende Kontermutter 414' verdrehbar; sie hat einen Ansatz 4141, der den Dichtring 421 im eingeschraubten Zustand übergreift, vgl. den in Fig. 6 zu sehenden Teil des Elektronik-Gehäuses 111.

Bei beiden bevorzugten Ausführungsformen des Adapters ist aufgrund des O-Rings 4102 bzw. des Dichtrings 421 gewährleistet, daß sich der Adapter am Elektronik-Gehäuse luft- und/oder feuchtigkeitsdicht etc. befestigen läßt.

## Patentansprüche

1. Meßgerät-Bussystem-Anordnung
- mit einem ersten, einem zweiten und einem m-ten Meßgerät (11, 12, 13), das
-- ein Elektronik-Gehäuse (111, 121, 131) mit einer Gewinde-Bohrung (113, 123, 133) für eine an sich einzuschraubende Kabeldurchführung sowie
-- eine erste, eine zweite und eine n-te im Elektronik-Gehäuse angeordnete Klemme (114, 115, 116) aufweist,
--- wobei m und n ganzzahlig und gleich oder größer als zwei sind sowie m gleich oder ungleich n ist,
- mit einem eine erste, eine zweite und eine n-te Leitung aufweisenden Bussystem (2),
-- das die n Leitungen zusammenfassende Kabelabschnitte umfaßt,
- mit einem ersten, einem zweiten und einem m-ten Busverteiler (31, 32, 33) aus Metall, der
-- eine zuführende Kabeldurchführung (311, 321, 331) für einen zuführenden Kabelabschnitt (211, 221, 231),
-- eine abführende Kabeldurchführung (312, 322, 332) für einen abführenden Kabelabschnitt (212, 222),
-- eine Leiterplatte (314) mit einer ersten, einer zweiten und einer n-ten Leitbahn (315, 316, 317), von denen
--- die erste mit der ersten Leitung (2111) des zuführenden Kabelabschnitts (211) und mit der ersten Leitung (2121) des abführenden (212) Kabelabschnitts,
--- die zweite mit der zweiten Leitung (2112) des zuführenden Kabelabschnitts und mit der zweiten Leitung (2122) des abführenden Kabelabschnitts sowie
--- die n-te mit der n-ten Leitung (2113) des zuführenden Kabelabschnitts und mit der n-ten Leitung (2123) des abführenden Kabelabschnitts verbunden ist, und
-- eine positionier- und danach verriegelbare Buchsenanordnung (313, 323, 333) mit einer ersten, einer zweiten und einer n-ten Buchse (318, 319, 320) aufweist,
--- von denen die erste mit der ersten Leitbahn, die zweite mit der zweiten Leitbahn und die n-te mit der n-ten Leitbahn kontaktiert ist, und
- mit einem ersten, einem zweiten und einem m-ten Adapter (41, 42, 43),
-- der als Metallrohr mit einem ersten und einem zweiten Ende (411, 412) ausgebildet ist,
--- welches erste Ende ein in die Gewinde-Bohrung (113, 123, 133) des Meßgeräts eingeschraubtes und mittels einer ersten Kontermutter (414; 414') gegen Verdrehen gesichertes Außengewinde (413; 413') aufweist und
--- welches zweite Ende mit einem in die Buchsenanordnung passenden, damit verriegelten und einen ersten, einen zweiten und einen n-ten Steckerstift (4151, 4152, 4153) aufweisenden Stecker (415) versehen ist,
---- von welchen Steckerstiften der erste mittels einer ersten Zwischenverbindungsleitung (416) an der ersten Klemme, der zweite mittels einer zweiten Zwischenverbindungsleitung (417) an der zweiten Klemme und der n-te mittels einer n-ten Zwischenverbindungsleitung (418) an der n-ten Klemme angeschlossen ist.

2. Adapter zum elektrischen Verbinden von innerhalb eines Elektronik-Gehäuses (111, 121, 131) eines Meßgeräts (11, 12, 13) angeordneten Klemmen (114, 115, 116) mit einem einzelne Leitungen aufweisenden Bussystem (2) über einen Busverteiler (31, 32, 33) aus Metall und zum freitragenden mechanischen Fixieren des Busverteilers am Meßgerät,
- dessen Elektronik-Gehäuse mindestens eine Gewinde-Bohrung (113, 123, 133) für eine an sich einzuschraubende Kabeldurchführung aufweist,
- welcher Busverteiler mit einer an die Leitungen des Bussystems angeschlossenen, positionier- und danach verriegelbaren Buchsenanordnung (313, 323, 333) versehen ist,
- welcher Adapter als Metallrohr mit einem ersten und einem zweiten Ende (411, 412) ausgebildet ist,
-- welches erste Ende ein in die Gewinde-Bohrung des Meßgeräts passendes erstes Außengewinde (413; 413') mit einer zugehörigen ersten Kontermutter (414; 414') aufweist und
-- welches zweite Ende mit einem in die Buchsenanordnung passenden, entsprechende Steckerstifte (4151, 4152, 4153) aufweisenden und mit der Buchsenanordnung verriegelbaren Stecker (415) versehen ist,
--- von denen jeder Steckerstift an einer zum Anschluß an die entsprechende Klemme ausreichend langen Zwischenverbindungsleitung (416, 417, 418) angeschlossen ist.

3. Meßgerät-Bussystem-Anordnung nach Anspruch 1, bei dem der Adapter (41, 42, 43)
- ein busverteiler-seitiges Teil (410) umfaßt,
-- das an seinem stecker-abgewandten Ende ein Sack-Innengewinde (4101) und
-- einen in einer zugeordneten Nut angeordneten O-Ring (4102) am inneren Ende des Sack-Innengewindes aufweist, und
- ein meßgerät-seitiges Teil (420) umfaßt,
-- das am vom zweiten Ende (411) abgewandten Ende ein zum Sack-Innengewinde (4101) passendes zweites Außengewinde (4201) aufweist,
--- das bis unter die erste Kontermutter (414) reicht und
--- auf dem eine zweite Kontermutter (4202) verdrehbar sitzt.

4. Adapter nach Anspruch 2, der
- ein busverteiler-seitiges Teil (410) umfaßt,
-- das an seinem stecker-abgewandten Ende ein Sack-Innengewinde (4101) und
-- einen in einer zugeordneten Nut angeordneten O-Ring (4102) am inneren Ende des Sack-Innengewindes aufweist, und
- ein meßgerät-seitiges Teil (420) umfaßt,
-- das am vom zweiten Ende (411) abgewandten Ende ein zum Sack-Innengewinde (4101) passendes zweites Außengewinde (4201) aufweist,
--- das bis unter die erste Mutter (414) reicht und
--- auf dem eine zweite Kontermutter (4202) verdrehbar sitzt.

5. Meßgerät-Bussystem-Anordnung nach Anspruch 1, bei dem das erste Außengewinde (413') des Adapters (41) auf seinem nicht in die Gewinde-Bohrung (113) eingeschraubten Teil einen Dichtring (421) trägt, den die erste Kontermutter (414') übergreift.

6. Adapter nach Anspruch 2, bei dem das erste Außengewinde (413') auf seinem nicht in die Gewinde-Bohrung (113) eingeschraubten Teil einen Dichtring (412) trägt, den die erste Kontermutter (414') übergreift.

## Claims

1. A measuring instrument / bus system arrangement
- with a first, a second and an **m**-th measuring instrument (11, 12, 13) which
-- comprises an electronic casing (111, 121, 131) with a threaded bore (113, 123, 133) for a cable through-duct to be screwed in *per se,* and
-- a first, a second and an **n**-th terminal (114, 115, 116) arranged in the electronic casing,
--- wherein **m** and **n** are whole numbers and equal to or larger than two and **m** is equal to or unequal to **n**,
- with a bus system (2) comprising a first, a second and an **n**-th line
-- which comprises cable portions which combine the **n** lines,
- with a first, a second and an **m**-th bus distributor (31, 32, 33) of metal which comprises
-- a feed cable through-duct (311, 321, 331) for a feed cable portion (211, 221, 231),
-- a removing cable through-duct (312, 322, 332) for a removing cable portion (212, 222),
-- a printed circuit board (314) with a first, a second and an **n**-th strip conductor (315, 316, 317), of which
--- the first is connected to the first line (2111) of the feed cable portion (211) and to the first line (2121) of the removing (212) cable portion,
--- the second is connected to the second line (2112) of the feed cable portion and to the second line (2122) of the removing cable portion, and
--- the **n**-th is connected to the **n**-th line (2113) of the feed cable portion and to the **n**-th line (2123) of the removing cable portion, and
-- a bush arrangement (313, 323, 333) - which can be positioned and then locked - with a first, a second and an **n**-th bush (318, 319, 320),
--- of which the first is contacted with the first strip conductor, the second with the second strip conductor and the **n**-th with the **n**-th strip conductor, and
- with a first, a second and an **m**-th adapter (41, 42, 43)
-- which is constructed in the form of a metal tube with a first and a second end (411, 412)
--- which first end has an external thread (413; 413') which is screwed into the threaded bore (113, 123, 133) of the measuring instrument and which is prevented from rotating by means of a first lock nut (414; 414'), and
--- which second end is provided with a connector (415) fitting in the sleeve arrangement and locked thereto and having a first, a second and an **n**-th connector pin (4151, 4152, 4153),
---- of which connector pins the first is attached to the first terminal by means of a first intermediate connecting line (416), the second is attached to the second terminal by means of a second intermediate connecting line (417), and the **n**-th is attached to the **n**-th terminal by means of an **n**-th intermediate connecting line (418).

2. An adapter for electrically connecting terminals (114, 115, 116) arranged inside an electronic casing (111, 121, 131) of a measuring instrument (11, 12, 13) to a bus system (2) having individual lines by way of a bus distributor (31, 32, 33) of metal and for fixing the bus distributor in a cantilevered mechanical manner to the measuring instrument,
- of which the electronic casing has at least one threaded bore (113, 123, 133) for a cable through-duct which can be screwed in *per se,*
- which bus distributor is provided with a bush arrangement (313, 323, 333) which is attached to the lines of the bus system and which can be positioned and then locked,
- which adapter is constructed in the form of a metal tube with a first and a second end (411, 412),
-- which first end has a first external thread (413; 413') fitting in the threaded bore of the measuring instrument and with an associated first lock nut (414; 414') and
-- which second end is provided with a connector (415) fitting in the bush arrangement and having corresponding connector pins (4151, 4152, 4153) and lockable with the bush arrangement,
--- of which each connector pin is attached to an intermediate connecting line (416, 417, 418) sufficiently long for attachment to the corresponding terminal.

3. A measuring instrument / bus system arrangement according to Claim 1, in which the adapter (41, 42, 43)
- has a part (410) towards the bus distributor,
-- which part (410) has a blind internal thread (4101) at its end remote from the connector, and
-- an O-ring (4102) arranged in an associated groove at the inner end of the blind internal thread, and
- has a part (420) towards the measuring instrument,
-- which part (420) is provided at the end remote from the second end (411) with a second external thread (4201) which fits the blind internal thread (4101)
--- and which extends to below the first lock nut (414) and
--- on which a second lock nut (4202) rests in a rotatable manner.

4. An adapter according to Claim 2, which
- has a part (410) towards the bus distributor,
-- which part (410) has a blind internal thread (4101) at its end remote from the connector, and
-- an O-ring (4102) arranged in an associated groove at the inner end of the blind internal thread, and
- has a part (420) towards the measuring instrument,
-- which part (420) is provided at the end remote from the second end (411) with a second external thread (4201) which fits the blind internal thread (4101)
--- and which extends to below the first nut (414) and
--- on which a second lock nut (4202) rests in a rotatable manner.

5. A measuring instrument / bus system arrangement according to Claim 1, in which the part of the first external thread (413') of the adapter (41) not screwed into the threaded bore (113) carries a sealing ring (421) over which the first lock nut (414') engages.

6. An adapter according to Claim 2, in which the part of the first external thread (413') not screwed into the threaded bore (113) carries a sealing ring (412) over which the first lock nut (414') engages.

## Revendications

1. Agencement avec dispositif de mesure et système de bus,
- comprenant un premier, un deuxième et un m-ième dispositif de mesure (11, 12, 13), qui comporte
-- un boîtier pour composant électronique (111, 121, 131) avec une forure taraudée (113, 123, 133) pour un passe-câble à visser dans celle-ci, ainsi que
-- une première, une deuxième et une n-ième borne (114, 115, 116) agencée dans le boîtier pour composant électronique,
--- sachant que m et n sont des nombres entiers, qui sont égaux ou supérieurs à deux, et que m est égal à n ou différent de n,
- comprenant un système de bus (2) comportant une première, une deuxième et une n-ième ligne,
-- lequel système de bus comporte les tronçons de câble regroupant les n lignes,
- comprenant un premier, un deuxième et un m-ième répartiteur de bus (31, 32, 33) en métal, qui comporte
-- un passe-câble d'entrée (311, 321, 331) pour un tronçon de câble d'entrée (211, 221, 231),
-- un passe-câble de sortie (312, 322, 332) pour un tronçon de câble de sortie (212, 222),
-- une plaquette de circuits imprimés (314) munie d'une première, d'une deuxième et d'une n-ième ligne d'interconnexion (315, 316, 317), parmi lesquelles
--- la première est reliée à la première ligne (2111) du tronçon de câble d'entrée (211) et avec la première ligne (2121) du tronçon de câble de sortie (212),
--- la deuxième est reliée à la deuxième ligne (2112) du tronçon de câble d'entrée et avec la deuxième ligne (2122) du tronçon de câble de sortie, ainsi que
--- la n-ième est reliée à la n-ième ligne (2113) du tronçon de câble d'entrée et avec la n-ième ligne (2123) du tronçon de câble de sortie, et
-- un agencement de douille (313, 323, 333) à positionner et à verrouiller ensuite, comportant une première, une deuxième et une n-ième douille (318, 319, 320),
--- parmi lesquelles la première est mise en contact avec la première ligne d'interconnexion, la deuxième avec la deuxième ligne d'interconnexion et la n-ième avec la n-ième ligne d'interconnexion, et
- comprenant un premier, un deuxième et un m-ième adaptateur (41, 42, 43),
-- qui est conçu sous forme d'un tube métallique avec une première et une deuxième extrémité (411, 412),
--- ladite première extrémité comportant un filetage (413 ; 413') vissé dans la forure taraudée (113, 123, 133) du dispositif de mesure et immobilisé en rotation par un premier contre-écrou (414 ; 414'), et
--- ladite deuxième extrémité étant munie d'un connecteur à fiches (415) ajusté à l'agencement de douille, bloqué avec celui-ci et muni d'une première, d'une deuxième et d'une n-ième fiche mâle (4151, 4152, 4153),
---- parmi lesquelles fiches mâles la première fiche est raccordée à la première borne au moyen d'une première ligne de connexion intermédiaire (416), la deuxième fiche est raccordée à la deuxième borne au moyen d'une deuxième ligne de connexion intermédiaire (417), la n-ième fiche est raccordée à la n-ième borne au moyen d'une n-ième ligne de connexion intermédiaire (418).

2. Adaptateur destiné à établir la liaison électrique entre les bornes (114, 115, 116), agencées à l'intérieur du boîtier pour composant électronique (111, 121, 131) d'un dispositif de mesure (11, 12, 13), et un système de bus (2) comportant différentes lignes, par l'intermédiaire d'un répartiteur de bus (31, 32, 33) en métal, et destiné à la fixation mécanique du répartiteur de bus au niveau du dispositif de mesure,
- dont le boîtier pour composant électronique comporte au moins une forure taraudée (113, 123, 133) pour un passe-câble à visser dans celle-ci,
- lequel répartiteur de bus est muni d'un agencement de douille (313, 323, 333), qui est raccordé aux lignes du système de bus et peut être positionné et verrouillé ensuite,
- lequel adaptateur est conçu sous forme d'un tube métallique avec une première et une deuxième extrémité (411, 412),
-- laquelle première extrémité comporte un premier filetage (413 ; 413') ajusté dans la forure taraudée du dispositif de mesure et muni d'un premier contre-écrou (414 ; 414') associé, et
-- laquelle deuxième extrémité est munie d'un connecteur à fiches (415) ajusté à l'agencement de douille, muni de fiches mâles (4151, 4152, 4153) et pouvant être bloqué avec l'agencement de douille,
---- parmi lesquelles chaque fiche mâle est raccordée à une ligne de connexion intermédiaire (416, 417, 418) suffisamment longue pour la connexion avec la borne correspondante.

3. Agencement avec dispositif de mesure et système de bus selon la revendication 1, dans lequel l'adaptateur (41, 42, 43)
- comporte une partie (410) du côté du répartiteur de bus,
-- laquelle comporte, sur son extrémité opposée au connecteur à fiches, un trou borgne taraudé (4101) et
-- un joint torique (4102), disposé dans une rainure correspondante, au niveau de l'extrémité intérieure du trou borgne taraudé, et
- comporte une partie (420) du côté du dispositif de mesure,
-- laquelle comporte, au niveau de l'extrémité opposée à la deuxième extrémité (411), un deuxième filetage (4201) adapté au trou borgne taraudé (4101),
--- lequel filetage s'étend jusqu'en dessous du premier contre-écrou (414) et
--- sur lequel est posé de manière rotative un deuxième contre-écrou (4202).

4. Adaptateur selon la revendication 2, qui
- comprend une partie (410) du côté du répartiteur de bus,
-- laquelle comporte, sur son extrémité opposée au connecteur à fiches, un trou borgne taraudé (4101) et
-- un joint torique (4102), disposé dans une rainure correspondante, au niveau de l'extrémité intérieure du trou borgne taraudé, et
- comprend une partie (420) du côté du dispositif de mesure,
-- laquelle comporte, au niveau de l'extrémité opposée à la deuxième extrémité (411), un deuxième filetage (4201) adapté au trou borgne taraudé (4101),
--- lequel filetage s'étend jusqu'en dessous du premier contre-écrou (414) et
--- sur lequel est posé de manière rotative un deuxième contre-écrou (4202).

5. Agencement avec dispositif de mesure et système de bus selon la revendication 1, dans lequel le premier filetage (413') de l'adaptateur (41) porte, sur sa partie non vissée dans la forure taraudée (113), une bague d'étanchéité (421), au-dessus de laquelle s'engage le premier contre-écrou (414').

6. Adaptateur selon la revendication 2, dans lequel le premier filetage (413') porte, sur sa partie non vissée dans la forure taraudée (113), une bague d'étanchéité (421), au-dessus de laquelle s'engage le premier contre-écrou (414').
